# EUROPEAN PATENT APPLICATION

(11) **EP 4 481 638 A2**
(43) Date of publication of application: **25.12.2024**
(21) Application number: 24182087.7
(22) Date of filing: 13.06.2024
(51) Int. Cl.: G06N 20/00, H04L 41/16

(54) **OPERATIONAL MODES FOR ENHANCED MACHINE LEARNING OPERATION**

(30) Priority: 23.06.2023 IN 202341041894
(71) Applicant: Nokia Technologies Oy, 02610 Espoo (FI)
(72) Inventor: FEKI, Afef, 92330 Sceaux (FR); KADADI, Shivanand, 560065 Bengaluru (IN); BOUTAUD DE LA COMBE, Xavier, 22560 Trébeurden (FR); RAMACHANDRAN, Srilatha, 560093 Bengaluru (IN); KOVÁCS, István Zsolt, 9000 Aalborg (DK); PANTELIDOU, Anna, 92160 Antony (FR)
(74) Representative: Script Intellectual Property LLP

(57) **Abstract**

Disclosed is a method comprising receiving a configuration indicating one or more rules for switching between a set of operational modes associated with at least one of: inference, data collection or training of a machine learning model, the machine learning model being associated with a network optimization function; determining, based on the one or more rules, whether to switch from a current operational mode to another operational mode from the set of operational modes; and performing the current operational mode or the other operational mode based on the determination.

## Description

### FIELD

The following example embodiments relate to wireless communication and to machine learning.

### BACKGROUND

A machine learning model may be used at a base station for inference. However, the performance of the machine learning model may degrade over time due to context changes, and thus the machine learning model may need to be updated. There is a challenge in how to provide a machine learning model update procedure to ensure the timely preparation of the adapted machine learning model with minimal performance degradation.

### BRIEF DESCRIPTION

The scope of protection sought for various example embodiments is set out by the claims. The example embodiments and features, if any, described in this specification that do not fall under the scope of the claims are to be interpreted as examples useful for understanding various embodiments.

According to an aspect, there is provided an apparatus comprising at least one processor, and at least one memory storing instructions that, when executed by the at least one processor, cause the apparatus at least to: receive a configuration indicating one or more rules for switching between a set of operational modes associated with at least one of: inference, data collection or training of a machine learning model, the machine learning model being associated with a network optimization function; determine, based on the one or more rules, whether to switch from a current operational mode to another operational mode from the set of operational modes; and perform the current operational mode or the other operational mode based on the determination.

According to another aspect, there is provided an apparatus comprising: means for receiving a configuration indicating one or more rules for switching between a set of operational modes associated with at least one of: inference, data collection or training of a machine learning model, the machine learning model being associated with a network optimization function; means for determining, based on the one or more rules, whether to switch from a current operational mode to another operational mode from the set of operational modes; and means for performing the current operational mode or the other operational mode based on the determination.

According to another aspect, there is provided a method comprising: receiving a configuration indicating one or more rules for switching between a set of operational modes associated with at least one of: inference, data collection or training of a machine learning model, the machine learning model being associated with a network optimization function; determining, based on the one or more rules, whether to switch from a current operational mode to another operational mode from the set of operational modes; and performing the current operational mode or the other operational mode based on the determination.

According to another aspect, there is provided a computer program comprising instructions which, when executed by an apparatus, cause the apparatus to perform at least the following: receiving a configuration indicating one or more rules for switching between a set of operational modes associated with at least one of: inference, data collection or training of a machine learning model, the machine learning model being associated with a network optimization function; determining, based on the one or more rules, whether to switch from a current operational mode to another operational mode from the set of operational modes; and performing the current operational mode or the other operational mode based on the determination.

According to another aspect, there is provided a computer readable medium comprising program instructions which, when executed by an apparatus, cause the apparatus to perform at least the following: receiving a configuration indicating one or more rules for switching between a set of operational modes associated with at least one of: inference, data collection or training of a machine learning model, the machine learning model being associated with a network optimization function; determining, based on the one or more rules, whether to switch from a current operational mode to another operational mode from the set of operational modes; and performing the current operational mode or the other operational mode based on the determination.

According to another aspect, there is provided a non-transitory computer readable medium comprising program instructions which, when executed by an apparatus, cause the apparatus to perform at least the following: receiving a configuration indicating one or more rules for switching between a set of operational modes associated with at least one of: inference, data collection or training of a machine learning model, the machine learning model being associated with a network optimization function; determining, based on the one or more rules, whether to switch from a current operational mode to another operational mode from the set of operational modes; and performing the current operational mode or the other operational mode based on the determination.

According to another aspect, there is provided an apparatus comprising at least one processor, and at least one memory storing instructions that, when executed by the at least one processor, cause the apparatus at least to: transmit, to a radio access network node, a configuration indicating one or more rules for switching between a set of operational modes associated with at least one of: inference, data collection or training of a machine learning model, the machine learning model being associated with a network optimization function.

According to another aspect, there is provided an apparatus comprising: means for transmitting, to a radio access network node, a configuration indicating one or more rules for switching between a set of operational modes associated with at least one of: inference, data collection or training of a machine learning model, the machine learning model being associated with a network optimization function.

According to another aspect, there is provided a method comprising: transmitting, to a radio access network node, a configuration indicating one or more rules for switching between a set of operational modes associated with at least one of: inference, data collection or training of a machine learning model, the machine learning model being associated with a network optimization function.

According to another aspect, there is provided a computer program comprising instructions which, when executed by an apparatus, cause the apparatus to perform at least the following: transmitting, to a radio access network node, a configuration indicating one or more rules for switching between a set of operational modes associated with at least one of: inference, data collection or training of a machine learning model, the machine learning model being associated with a network optimization function.

According to another aspect, there is provided a computer readable medium comprising program instructions which, when executed by an apparatus, cause the apparatus to perform at least the following: transmitting, to a radio access network node, a configuration indicating one or more rules for switching between a set of operational modes associated with at least one of: inference, data collection or training of a machine learning model, the machine learning model being associated with a network optimization function.

According to another aspect, there is provided a non-transitory computer readable medium comprising program instructions which, when executed by an apparatus, cause the apparatus to perform at least the following: transmitting, to a radio access network node, a configuration indicating one or more rules for switching between a set of operational modes associated with at least one of: inference, data collection or training of a machine learning model, the machine learning model being associated with a network optimization function.

### LIST OF DRAWINGS

In the following, various example embodiments will be described in greater detail with reference to the accompanying drawings, in which
FIG. 1 illustrates an example of a wireless communication network;
FIG. 2 illustrates a functional framework for machine learning use in a radio access network;
FIG. 3 illustrates an example of a first operational mode;
FIG. 4 illustrates an example of a second operational mode;
FIG. 5A illustrates an example of a third operational mode;
FIG. 5B illustrates another example of the third operational mode;
FIG. 6A illustrates an example of a fourth operational mode;
FIG. 6B illustrates another example of the fourth operational mode;
FIG. 7 illustrates some examples of rules for switching between the operational modes;
FIG. 8 illustrates a signal flow diagram;
FIG. 9 illustrates a flow chart;
FIG. 10 illustrates a flow chart;
FIG. 11 illustrates an example of an apparatus; and
FIG. 12 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies: Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications.

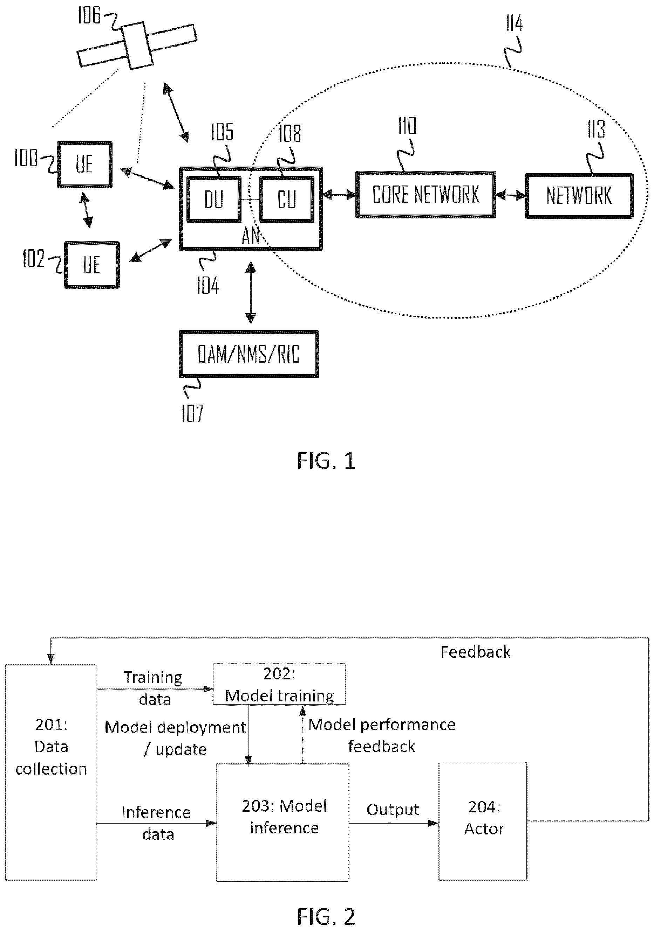

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the embodiments described herein to other wireless communication networks provided with necessary properties.

The example wireless communication network shown in FIG. 1 includes an access network, such as a radio access network (RAN), and a core network 110.

FIG. 1 shows user equipment (UE) 100, 102 configured to be in a wireless connection on one or more communication channels in a radio cell with an access node (AN) 104 of an access network. The AN 104 may be an evolved NodeB (abbreviated as eNB or eNodeB), or a next generation evolved NodeB (abbreviated as ng-eNB), or a next generation NodeB (abbreviated as gNB or gNodeB), providing the radio cell. The wireless connection (e.g., radio link) from a UE to the access node 104 may be called uplink (UL) or reverse link, and the wireless connection (e.g., radio link) from the access node to the UE may be called downlink (DL) or forward link. UE 100 may also communicate directly with UE 102, and vice versa, via a wireless connection generally referred to as a sidelink (SL). It should be appreciated that the access node 104 or its functionalities may be implemented by using any node, host, server or access point etc. entity suitable for providing such functionalities.

The access network may comprise more than one access node, in which case the access nodes may also be configured to communicate with one another over links, wired or wireless. These links between access nodes may be used for sending and receiving control plane signaling and also for routing data from one access node to another access node.

The access node may comprise a computing device configured to control the radio resources of the access node. The access node may also be referred to as a base station, a base transceiver station (BTS), an access point, a cell site, a radio access node or any other type of node capable of being in a wireless connection with a UE (e.g., UEs 100, 102). The access node may include or be coupled to transceivers. From the transceivers of the access node, a connection may be provided to an antenna unit that establishes bi-directional radio links to UEs 100, 102. The antenna unit may comprise an antenna or antenna element, or a plurality of antennas or antenna elements.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and a mobility management entity (MME). The 5GC may comprise network functions, such as a user plane function (UPF), an access and mobility management function (AMF), and a location management function (LMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device just to mention but a few names. The UE may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or any computing device comprising a wireless modem integrated in a vehicle.

It should be appreciated that a UE may also be a nearly exclusive uplink-only device, of which an example may be a camera or video camera loading images or video clips to a network. A UE may also be a device having capability to operate in an Internet of Things (IoT) network, which is a scenario in which objects may be provided with the ability to transfer data over a network without requiring human-to-human or human-to-computer interaction. The UE may also utilize cloud. In some applications, the computation may be carried out in the cloud or in another UE.

The wireless communication network may also be able to support the usage of cloud services, for example at least part of core network operations may be carried out as a cloud service (this is depicted in FIG. 1 by "cloud" 114). The wireless communication network may also comprise a central control entity, or the like, providing facilities for wireless communication networks of different operators to cooperate for example in spectrum sharing.

5G enables using multiple input - multiple output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine type applications, such as (massive) machine-type communications (mMTC), including vehicular safety, different sensors and real-time control.

In 5G wireless communication networks, access nodes and/or UEs may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, a 5G wireless communication network may support both inter-RAT operability (such as LTE-5G) and inter-RI operability (inter-radio interface operability, such as below 6GHz - cmWave - mmWave). One of the concepts considered to be used in 5G wireless communication networks may be network slicing, in which multiple independent and dedicated virtual sub-networks (network instances) may be created within the substantially same infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In some example embodiments, an access node (e.g., access node 104) may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node. The DU 105 may be a logical node hosting radio link control (RLC), medium access control (MAC) and/or physical (PHY) layers of the NR protocol stack for the access node. The operations of the DU may be at least partly controlled by the CU. It should also be understood that the distribution of functions between DU 105 and CU 108 may vary depending on implementation. The CU may comprise a control plane (CU-CP), which may be a logical node hosting the RRC and the control plane part of the PDCP protocol of the NR protocol stack for the access node. The CU may further comprise a user plane (CU-UP), which may be a logical node hosting the user plane part of the PDCP protocol and the SDAP protocol of the CU for the access node.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the access network (e.g., RAN) by utilizing network function virtualization (NFV) and software defined networking (SDN). Using edge cloud may mean access node operations to be carried out, at least partly, in a computing system operationally coupled to a remote radio head (RRH) or a radio unit (RU) of an access node. It is also possible that access node operations may be performed on a distributed computing system or a cloud computing system located at the access node. Application of cloud RAN architecture enables RAN real-time functions being carried out at the access network (e.g., in a DU 105) and non-real-time functions being carried out in a centralized manner (e.g., in a CU 108).

It should also be understood that the distribution of functions between core network operations and access node operations may differ in future wireless communication networks compared to that of the LTE or 5G, or even be non-existent. Some other technology advancements that may be used include big data and all-IP, which may change the way wireless communication networks are being constructed and managed. 5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network, enabling more extensive network coverage. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay access node or by an access node 104 located on-ground or in a satellite.

It is obvious for a person skilled in the art that the access node 104 depicted in FIG. 1 is just an example of a part of an access network (e.g., a radio access network) and in practice, the access network may comprise a plurality of access nodes, the UEs 100, 102 may have access to a plurality of radio cells, and the access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of an access network (e.g., a radio access network), a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

The wireless communication network may further comprise another network entity 107, such as a network management system (NMS), or operations, administration, and maintenance (OAM) function, and/or a RAN intelligent controller (RIC). The network entity 107 may be configured to communicate with the access node 104 via a wired or wireless connection.

The NMS refers to software tools and hardware devices designed to monitor, control, and manage the network infrastructure. This system facilitates the administration of the network's components, including but not limited to, servers, routers, switches, network slices, and edge computing nodes. In the context of 5G, the NMS is responsible for the continuous tracking of network performance, device status, and network availability, while also addressing the increased complexity associated with 5G's advanced features. The NMS is designed to integrate with artificial intelligence (AI) and machine learning (ML) technologies to automate and optimize network management, given the complexity of 5G networks.

OAM refers to the set of processes, procedures, and tools used to manage and maintain a network. OAM allows network operators to monitor network performance, diagnose and resolve issues, and perform maintenance tasks. OAM functions may include fault management, performance management, security management, and configuration management.

The RIC is a component to enable more intelligent and dynamic control of the RAN. The RIC forms part of the open radio access network (O-RAN) architecture, which aims to disaggregate the RAN into modular and interoperable elements from different vendors. The RIC serves as a platform for deploying and executing real-time control and optimization algorithms, known as "xApps", for the RAN. These xApps can provide functions such as dynamic radio resource management, interference management, load balancing, and spectrum optimization, among others. By doing so, the RIC enables a more flexible and programmable RAN, improving the network's performance, efficiency, and adaptability.

The RIC may be divided into two components: non-real-time RIC and near-real-time RIC. The non-real-time RIC (non-RT RIC) deals with less time-sensitive operations, such as policy control, analytics, and longer-term optimization of the RAN. The near-real-time RIC (near-RT RIC) handles time-sensitive operations requiring fast response times, such as real-time radio resource management, scheduling, and interference control.

To meet the 5G network requirements of performance and the demands of the unprecedented growth of the mobile subscribers, millions of RAN nodes (i.e., base stations) are being deployed. Such rapid growth brings the issues of optimizing the network. Artificial intelligence (AI) and machine learning (ML) techniques may be utilized to automate the optimization. For example, ML may be used for the following RAN use cases: network energy saving, load balancing, and/or mobility optimization.

ML-based prediction may enable improved performance. For example, prediction of UE trajectory or future location may be useful to adjust handover thresholds, such as the cell individual offset or to select the RAN-based notification area (RNA) in RRC inactive state. Prediction of UE location may further help network resource allocation for various use cases including energy saving, load balancing and mobility management. As another example, handover decisions may be improved by using prediction information on the UE performance at the target cell. Energy saving decisions taken locally at a cell may be improved by utilizing prediction information on incoming UE traffic, as well as prediction information about traffic that may be offloaded from a candidate energy saving cell to a neighbor cell ensuring coverage.

In machine learning, the ML models continuously learn and evolve based on the input of increasing amounts of data, while retaining previously learned knowledge. At least two types of re-training may be applied: stateful (re)training or stateless (re)training.

Stateful (re)training means that the ML model continues training on new data (fine-tuning). This mostly refers to data iteration, i.e., using the same model architecture and features, but training with new data. This allows updating (fine-tuning) the model with less data. Stateful (re)training may use automated training procedures.

Stateless (re)training means that the ML model is trained from scratch each time based on new training data. This allows changing the model architecture or adding a new feature, but requires training the new model from scratch (i.e., a new model iteration). Stateless (re)training may use manual or automated training procedures.

Additionally, ML model training may also be defined for the following types: offline training or online training.

Offline training is an ML training process, where the model is trained based on a collected dataset, and where the trained model is later used or delivered for inference.

Online training is an ML training process, where the model being used for inference is trained (e.g., continuously) in (near) real-time as new training data samples arrive. It should be noted that the notion of (near) real-time with respect to non-real-time is context-dependent and is relative to the inference time-scale.

The above definitions only serve as a guidance. For example, there may be cases that may not exactly conform to these definitions, but could still be categorized as online training by commonly accepted conventions.

Currently, there is research work ongoing to introduce ML intelligence in the RAN. Specifically, the work focuses on specifying data collection enhancements and signaling support within the NG-RAN interfaces and architecture (including non-split architecture and split architecture) for ML-based network energy saving, load balancing and mobility optimization.

FIG. 2 illustrates the functional framework for machine learning use in a radio access network.

Referring to FIG. 2, the data collection function 201 is a function that provides training data as input to the model training function 202, and inference data as input to the model inference function 203. ML algorithm specific data preparation (e.g., data pre-processing and cleaning, formatting, and transformation) may not be carried out at the data collection function 201.

Some examples of the training data or inference data may include measurements from UEs or different network entities, feedback from the actor 204, and/or output from an ML model.

The model training function 202 is a function that performs the ML model training, validation, and testing which may generate model performance metrics as part of the model testing procedure. The model training function 202 may also be responsible for data preparation (e.g., data pre-processing and cleaning, formatting, and transformation) based on the training data delivered by the data collection function 201, if required.

Model deployment or update may be used to initially deploy a trained, validated, and tested ML model to the model inference function 203 or to deliver an updated model to the model inference function 203.

The model inference function 203 is a function that provides ML model inference output (e.g., predictions or decisions). The model inference function 203 may provide model performance feedback to the model training function 202, when applicable. The model inference function 203 may also be responsible for data preparation (e.g., data pre-processing and cleaning, formatting, and transformation) based on the inference data delivered by the data collection function 201, if required. The inference output of the ML model is produced as the output of the model inference function 203. The inference output may be use case specific. Model performance feedback from the model inference function 203 may be used for monitoring the performance of the ML model, when available.

The actor 204 is a function that receives the output from the model inference function 203 and triggers or performs corresponding actions. The actor 204 may trigger actions directed to other entities or to itself.

The actor 204 may provide feedback information, which is stored or sent to the data collection 201 and used thereafter for training and inference.

Based on the location of the model training function 202 and the model inference function 203, at least the following two options are possible. In the first option, the model training function 202 may be located in the operations, administration, and maintenance (OAM) functions 107, and the model inference function 203 may be located in a RAN node 104 (e.g., gNB-CU 108). In the second option, the model training function 202 and the model inference function 203 may both be located in a RAN node 104 (e.g., gNB-CU 108). In both options, it is also possible that the RAN node may continue model training based on an initial model trained in the OAM 107.

When the ML model is deployed at the RAN node 104 (base station) with a training and inference engine, the performance of the trained model may degrade over time due to context changes. For this reason, an update of the ML model may need to be performed. Different options can be considered, such as re-training, fine-tuning and ensemble training. However, there is a challenge in how to perform the ML model update procedure to ensure the timely preparation of the adapted ML model and with minimal performance degradation, accounting for possible ML or non-ML based functionalities to be used as a fallback solution during the adaptation of the ML model.

Thus, there is a need for a comprehensive solution for the ML model embedded in the RAN node (base station) for handling the needed updates, while ensuring continuous functioning with desirable performance, and more specifically managing the different operations including collecting labelled training data, performing training, and possibly reverting to a legacy (e.g., non-ML) procedure.

Some example embodiments are described below using principles and terminology of 5G radio access technology without limiting the example embodiments to 5G radio access technology, however.

Some example embodiments relate to an ML model embedded in a RAN node (base station), which runs with network assistance. Some example embodiments provide a method and related signaling to the setup of different operational modes, when deploying the ML model, and the rules to switch from one operational mode to another to ensure optimal overall functioning.

The ML model may be associated with a network optimization function, such as at least one of: radio resource management, network energy saving, load balancing, mobility optimization, cell selection, carrier selection, scheduling, or beam management.

Machine learning embedded in the RAN node (base station) may involve several ML functions, namely training, inference and data collection. An operational mode with an ML option may imply the call of at least one of these functions.

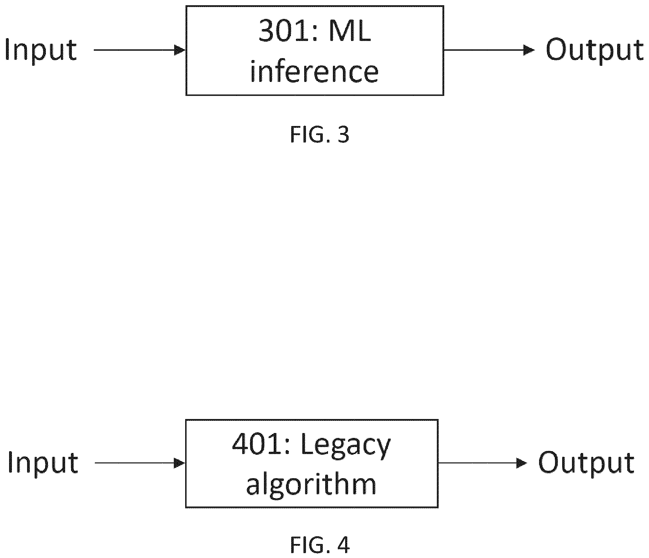

Some examples of the operational modes are illustrated in FIGS. 3, 4, 5A, 5B, 6A, and 6B.

FIG. 3 illustrates an example of a first operational mode, referred to as an exclusive Al/ML mode, which comprises running the inference with the machine learning model for performing the network optimization function (i.e., the network optimization function is exclusively performed with ML). In other words, an ML model is already trained and used for inference, i.e., to run the inference engine 301. The inference 301 provides one or more outputs (i.e., predictions) based on one or more inputs.

For example, in a carrier aggregation (CA) secondary cell (SCell) selection use case, the input of the ML model may comprise channel quality indicator (COI) and identity of the secondary cell. In this use case, the output of the ML model may comprise predicted spectral efficiency of the secondary cell. Alternatively, or additionally, the input of the ML model may comprise, for example, reference signal received power (RSRP) measurements on one or more cells.

FIG. 4 illustrates an example of a second operational mode, referred to as an exclusive non-AI/ML mode or legacy mode, which comprises deactivating the machine learning model, and using a non-machine-learning-based algorithm 401 (legacy algorithm) for performing the network optimization function. The non-machine-learning-based algorithm provides one or more outputs based on one or more inputs.

As an example, in the CA SCell selection use case, the non-machine-learning-based algorithm 401 (legacy algorithm) may select the secondary cell, which provides the best secondary cell bandwidth.

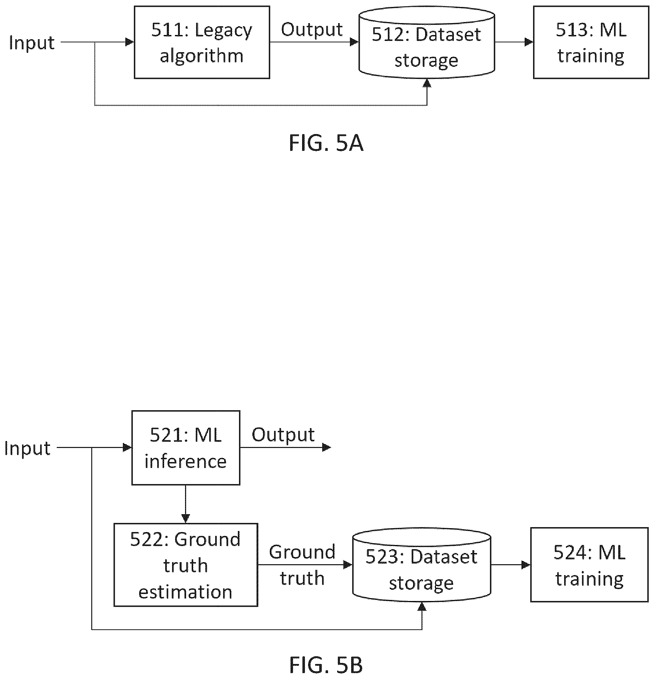

FIG. 5A illustrates an example of a third operational mode, referred to as a hybrid mode training purpose, which comprises collecting labelled training data, while using the non-machine-learning-based algorithm for performing the network optimization function, and updating the machine learning model based on the labelled training data. This operational mode corresponds to the case where the ML model should be updated to cope with the context changes. To this end, in this example, a non-AI or non-ML algorithm 511 (legacy algorithm) may be used for performing the network optimization function to ensure continuous functionality, while collecting in parallel labelled training data into a dataset storage 512 (i.e., in a memory). The dataset storage 512 may include the inputs and outputs of the legacy algorithm 511. The ML model may be updated at 513 based on the collected labelled training data after a sufficient amount of training data has been collected (following one of the possibilities among re-training, refinement, and ensemble learning).

FIG. 5B illustrates another example of the third operational mode (hybrid mode training purpose). In this example, the training of the ML model is based on ground truth estimation 522. The network optimization function may be performed by running the inference 521 with the ML model, or by using the non-ML algorithm (legacy algorithm). The ground truth estimation 522 is performed to collect ground truth data into a dataset storage 523. The dataset storage 523 may also include the inputs of the ML inference 521 or the legacy algorithm. The ML model is updated or trained at 524 using the collected labelled training data, which includes ground truth data and the corresponding inputs in this example. The ground truth data refers to the actual measured or observed data corresponding to the output (prediction) of the ML model. For example, for the CA SCell activation use case, the output of the ML model may include predicted spectral efficiency, and the ground truth data may include the actual spectral efficiency measured by the RAN node (base station).

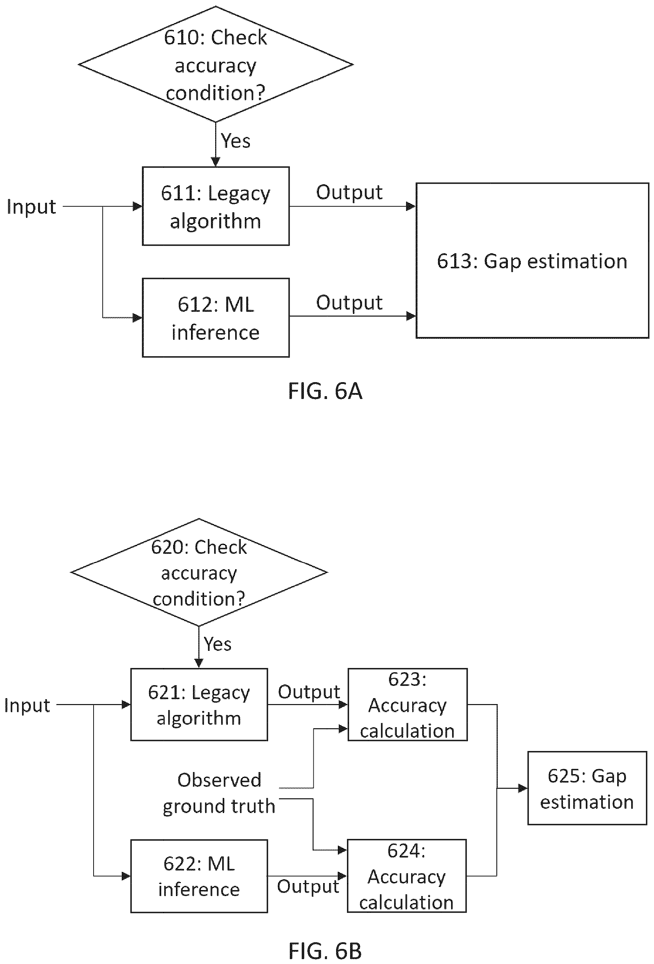

FIG. 6A illustrates an example of a fourth operational mode, referred to as a hybrid mode accuracy purpose, which comprises determining one or more performance metrics, such as accuracy, of the machine learning model from time to time by comparing one or more outputs of the machine learning model with one or more corresponding outputs of the non-machine-learning-based algorithm. The comparison between the non-machine-learning-based algorithm (legacy algorithm) and the machine learning model may be made by estimating the gap (i.e., difference) of the outputs and then comparing the gap to a reference threshold or checking the range. When the accuracy check condition 610 is fulfilled, the non-ML algorithm 611 (legacy algorithm) is run in parallel with the ML inference 612 in order to derive the outputs of the non-ML algorithm 611 and the ML inference 612. The outputs of the non-ML algorithm 611 and the ML inference 612 are then compared to estimate 613 the gap (i.e., the difference between the outputs) and therefore the accuracy of the ML model (with regard to the legacy algorithm). For example, the accuracy check may be performed at pre-defined time intervals (i.e., according to a pre-defined periodicity), and thus the accuracy check condition 610 may be fulfilled at the expiration of a corresponding timer, for example.

FIG. 6B illustrates another example of the fourth operational mode (hybrid mode accuracy purpose). In this example, the one or more performance metrics, such as accuracy, of the machine learning model are determined from time to time by comparing one or more outputs of the machine learning model with corresponding ground truth data (e.g., observed or measured by the RAN node or UE). Herein the accuracy of the ML model means the error between the output (prediction) of the ML model and the ground truth. When the accuracy check condition 620 is fulfilled, the non-ML algorithm 621 (legacy algorithm) is run in parallel with the ML inference 622 in order to derive the outputs of the non-ML algorithm 621 and the ML inference 622. The outputs are then used to estimate the accuracy of the legacy algorithm as well as the accuracy of the ML model at 623 and 624, respectively, based on ground truth data observed for the corresponding entries. At the gap estimation 625, the accuracy of the legacy algorithm and the accuracy of the ML model are compared. This allows the possibility to fall back to the legacy algorithm with high confidence, if the performance of the ML model is low while the performance of the legacy algorithm is acceptable.

In other words, at 623, one or more performance metrics, such as accuracy, of the non-machine-learning-based algorithm are determined by comparing one or more outputs of the non-machine-learning-based algorithm with the corresponding ground truth data. At 624, the one or more performance metrics, such as accuracy, of the machine learning model are determined by comparing one or more outputs of the machine learning model with the corresponding ground truth data. At 625, the one or more performance metrics of the machine learning model and the one or more performance metrics of the non-machine-learning-based algorithm are compared to determine whether to use the machine learning model or the non-machine-learning-based algorithm for performing the network optimization function (depending on which one of them provides better performance).

As an example, for CA SCell selection, the output of the ML model may be predicted spectral efficiency of the secondary cell (i.e., of the carrier components), wherein this prediction may be used for selecting the best carrier component. Thus, in this case, when the RAN node (base station) later calculates the actual spectral efficiency (ground truth) after the SCell selection, it can compare the actual spectral efficiency to the previously predicted spectral efficiency (and possibly with the output of the legacy algorithm) for estimating the accuracy.

As an alternative or in addition to accuracy, the one or more performance metrics may comprise at least one of: convergence time, reliability, or statistical significance.

Herein the terms "first operational mode", "second operational mode", "third operational mode", and "fourth operational mode" are used to distinguish the operational modes, and they do not necessarily mean a specific order of the operational modes.

The switching policies or rules among the above-defined operational modes may be set up or specified by a network entity 107, such as OAM or NMS or RIC. The switching policies or rules may then be shared with the RAN node 104.

As the RAN nodes (base stations) in the network may vary with regard to the hardware deployed, load, etc., it may be beneficial to have an adaptive scheme, which allows to indicate in a precise manner which operational mode to run. A given operational mode may then trigger specific modes of operation and functionalities at the RAN node.

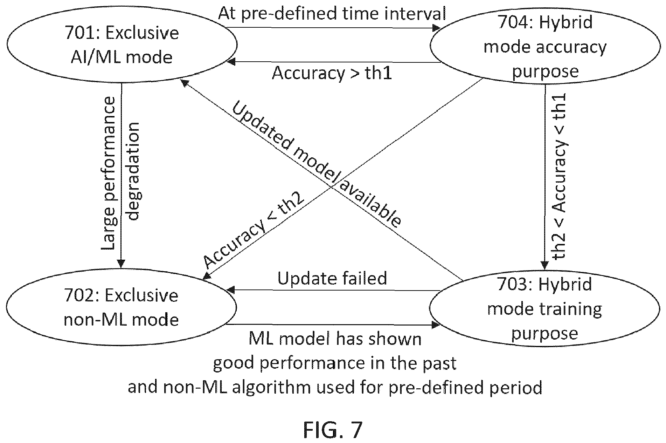

FIG. 7 illustrates some examples of rules for switching between the operational modes defined above. However, depending on the use case, the rules may also be different or extended from what is shown in FIG. 7.

Referring to FIG. 7, one of the rules may indicate to switch from the first operational mode 701 (exclusive Al/ML mode) to the fourth operational mode 704 (hybrid mode accuracy purpose) at one or more pre-defined time intervals (e.g., upon expiration of a timer). In other words, at the exclusive Al/ML mode, this rule may indicate to switch to the hybrid mode accuracy purpose according to a pre-defined periodicity (e.g., every T period).

Another one of the rules may indicate to switch from the fourth operational mode 704 (hybrid mode accuracy purpose) to the first operational mode 701 (exclusive Al/ML mode), if the one or more performance metrics, such as the accuracy, of the machine learning model is above a first threshold (th1). In other words, the hybrid mode accuracy purpose may be used for a pre-defined duration, and then it may be switched back to the exclusive AI/ML mode, if the estimated accuracy of the machine learning model is acceptable (i.e., above the first threshold). The first threshold may be pre-defined or configured by the network entity 107.

Another one of the rules may indicate to switch from the fourth operational mode 704 (hybrid mode accuracy purpose) to the second operational mode 702 (exclusive non-ML mode), if the one or more performance metrics, such as the accuracy, of the machine learning model is below a second threshold (th2). The second threshold may be pre-defined or configured by the network entity 107, and the second threshold may be lower than the first threshold. In other words, if the accuracy of the machine learning model is very low (<th2), then the ML model functioning may be severely impacted, and there may be a big risk of performance degradation. For this reason, it may be beneficial to switch to the exclusive non-ML mode corresponding to the legacy algorithm used previously.

Another one of the rules may indicate to switch from the fourth operational mode 704 (hybrid mode accuracy purpose) to the third operational mode 703 (hybrid mode training purpose), if the one or more performance metrics, such as the accuracy, of the machine learning model is between the second threshold and the first threshold (th2 < accuracy < th1). This corresponds to the case, where the performance of the machine learning model is not that good and should be improved with a retraining or refinement.

Another one of the rules may indicate to switch from the second operational mode 702 (exclusive non-ML mode) to the third operational mode 703 (hybrid mode training purpose), if a past performance of the machine learning model is above a third threshold (i.e., the ML model has shown good performance in the past), and if the non-machine-learning-based algorithm (legacy algorithm) has been used for performing the network optimization function at least for a pre-defined period of time. The idea is to keep track of the ML model performance, so that if the ML model was performing well in the past but due to a change in the conditions it is no more performing as expected (resulting in a switch to the exclusive non-ML mode for the pre-defined period of time), then the ML model should be updated to provide better performance.

Another one of the rules may indicate to switch from the third operational mode 703 (hybrid mode training purpose) to the first operational mode 701 (exclusive AI/ML mode), if the updating or training of the machine learning model is completed (i.e., if an updated machine learning model is available).

Another one of the rules may indicate to switch from the third operational mode 703 (hybrid mode training purpose) to the second operational mode 702 (exclusive non-ML mode), if the updating of the machine learning model failed.

Another one of the rules may indicate to switch from the first operational mode 701 (exclusive AI/ML mode) to the second operational mode 702 (exclusive non-ML mode), if a performance degradation caused by running the inference with the machine learning model is above a fourth threshold (i.e., if a significant performance degradation is detected when using the ML model). As a non-limiting example, if the throughput decreases by 90 % or more with the machine learning model, then this may cause a switch from the exclusive AI/ML mode to the exclusive non-ML mode.

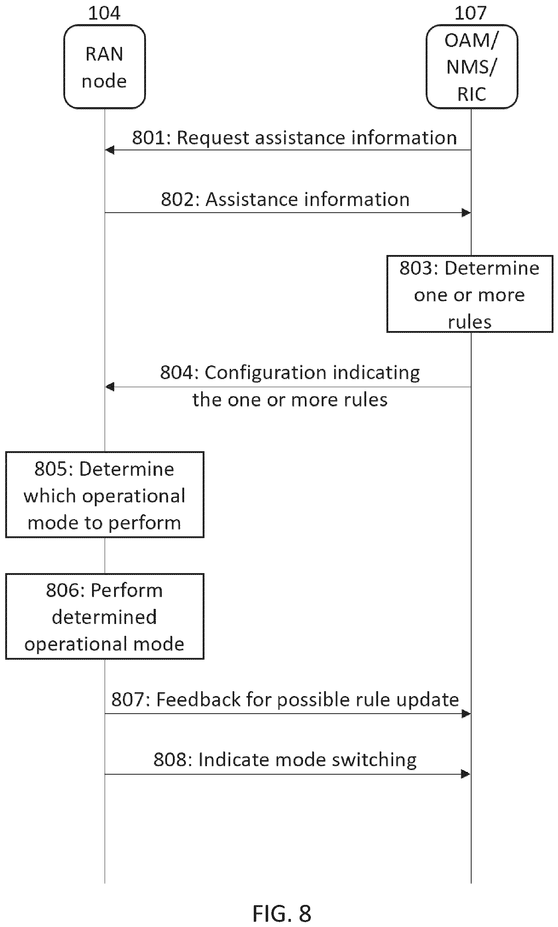

FIG. 8 illustrates a signal flow diagram according to an example embodiment.

Referring to FIG. 8, at 801, a network entity 107, such as an NMS, OAM or RIC, may transmit, to a radio access network node 104 (e.g., a gNB), a request for providing assistance information indicating a set of operational modes supported by the radio access network node. The radio access network node may receive the request.

The set of operational modes are associated with at least one of: inference, data collection or training of a machine learning model, the machine learning model being associated with a network optimization function. The set of operational modes may comprise, for example, the first operational mode (see FIG. 3), the second operational mode (see FIG. 4), the third operational mode (see FIG. 5A and 5B), and the fourth operational mode (see FIG. 6A and 6B) described above.

For example, the network optimization function may comprise at least one of: radio resource management, network energy saving, load balancing, mobility optimization, cell selection, carrier selection, scheduling, or beam management. However, it should be noted that the example embodiment is not limited to these network optimization functions, and it may be used for any other network optimization use cases as well. The network optimization function may also be referred to as a radio access network optimization function.

At 802, the radio access network node 104 may transmit to the network entity 107, the assistance information indicating the set of operational modes supported by the radio access network node, wherein the assistance information may be transmitted based on receiving the request. The network entity may receive the assistance information.

The assistance information may further comprise one or more parameters related to the set of operational modes, wherein the one or more parameters may indicate at least one of: the machine learning model used or to use by the radio access network node in at least one operational mode (e.g., in the first operational mode) of the set of operational modes, or a non-machine-learning-based algorithm used or to use by the radio access network node in at least one operational mode (e.g., the second operational mode) of the set of operational modes for performing the network optimization function.

Alternatively, the network entity 107 may already be aware of the set of operational modes supported by the radio access network node 104, in which case 801 and 802 may be omitted.

At 803, the network entity 107 determines, for example based at least partly on the assistance information, one or more rules (triggering conditions) for switching between or among the set of operational modes (i.e., from one operational mode to another) at the radio access network node 104. In other words, the network entity 107 establishes the rule(s) tailored for this specific radio access network node 104. The one or more rules may comprise one or more of the rules described above with reference to FIG. 7.

The set of operational modes supported by the radio access network node may depend on static factors (e.g., hardware type, memory) and/or context factors (e.g., average number of attached users, or average load) reflecting long-term RAN node statistics. Thus, the determination of the one or more rules may also be based on the capabilities of the radio access network node 104 (e.g., the static factors and/or context factors), which may be known by the network entity 107 or indicated in the assistance information. For example, if the radio access network node 104 is highly loaded with its users, then priority should be given to the users, and the frequency of training or updating the machine learning model (i.e., switching to the third operational mode) may be reduced (i.e., to trigger the training or updating of the ML model less often). As another example, if the radio access network node 104 is highly loaded, then the periodicity of switching to the fourth operational mode may be set higher, such that the accuracy check is done less often in order to save resources.

At 804, the network entity 107 transmits, to the radio access network node 104, a configuration indicating the one or more rules for switching between or among the set of operational modes. The radio access network node receives the configuration. The configuration may also indicate the first threshold and the second threshold described above, as well as the periodicity of the fourth operational mode (i.e., indicating how often to switch to the hybrid mode accuracy purpose).

At 805, the radio access network node 104 determines, based on the one or more rules, whether to switch from a current operational mode to another operational mode from the set of operational modes (e.g., refer to FIG. 7 and the description thereof). In other words, the radio access network node determines which operational mode from the set of operational modes to run.

At 806, the radio access network node 104 performs or runs the current operational mode or the other operational mode based on the determination. For example, if the radio access network node determines to switch from the current operational mode to the other operational mode, then the radio access network node performs the other operational mode. Alternatively, if the radio access network node determines to not switch from the current operational mode to the other operational mode, then the radio access network node performs the current operational mode.

At 807, the radio access network node 104 may transmit to the network entity 107, feedback information on the performance of one or more operational modes of the set of operational modes. The feedback reporting may be configured in the configuration at 804. For example, the feedback information may indicate that an update of the one or more rules may be needed.

At 808, the radio access network node 104 may transmit to the network entity 107, an indication indicating the switch to the other operational mode, based on determining to switch from the current operational mode to the other operational mode. In other words, the radio access network node may inform the network entity each time a triggering condition (rule) is fulfilled, and a mode switching is executed. This indication may be used by the network entity 107 to verify that at least one of the configured rules was applied and how often it was applied. The indication (feedback) from one RAN node may be useful for adjusting the rule(s) for that RAN node, but it may also be helpful for other nodes.

Alternatively, 807 and 808 may be performed as a single process. For example, the radio access network node 104 may transmit the feedback information including an indication indicating the mode switching.

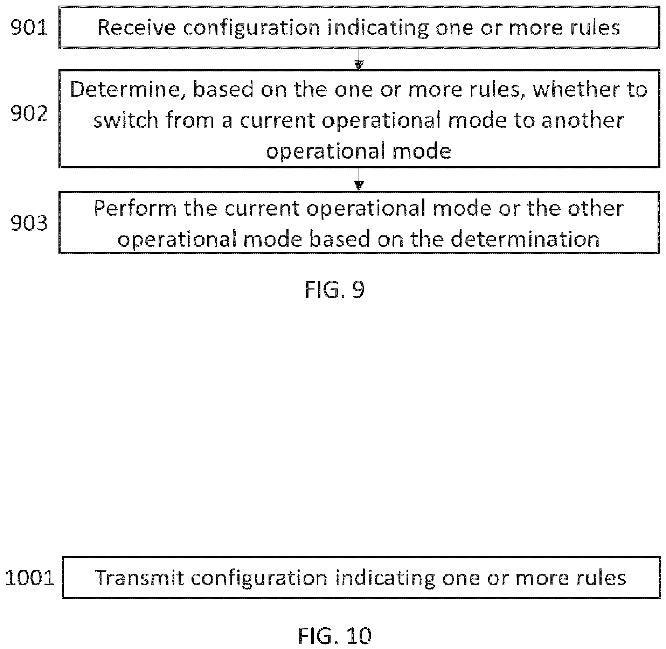

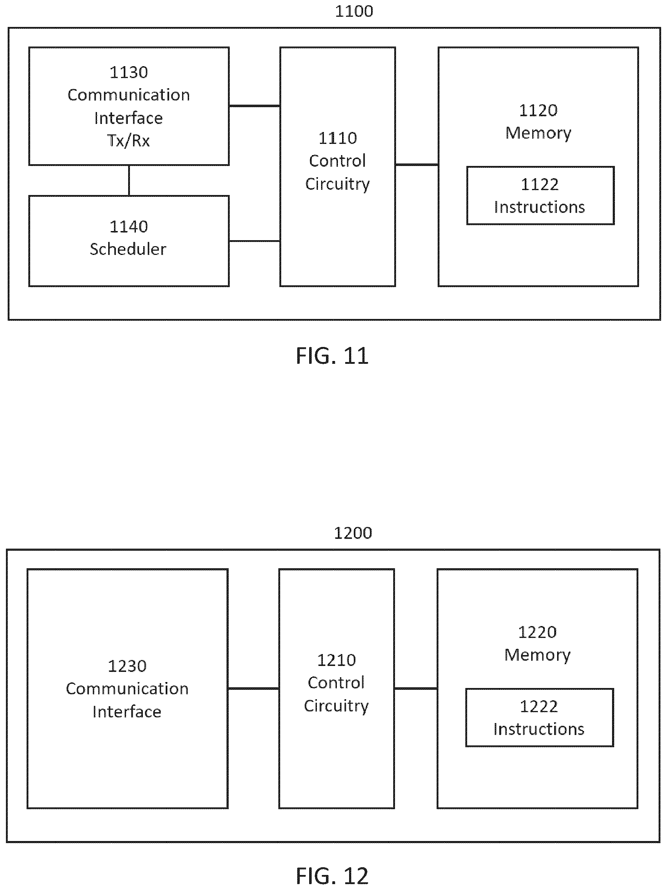

FIG. 9 illustrates a flow chart according to an example embodiment of a method performed by an apparatus 1100 of FIG. 11. For example, the apparatus 1100 may be, or comprise, or be comprised in, a radio access network node 104.

Referring to FIG. 9, in block 901, the apparatus receives a configuration indicating one or more rules for switching between a set of operational modes associated with at least one of: inference, data collection or training of a machine learning model, the machine learning model being associated with a network optimization function. For example, the machine learning model may be used to run the network optimization function at the apparatus. The configuration may be received from a network entity 107, such as a network management system, or an operations, administration and maintenance function, or a radio access network intelligent controller.

For example, the network optimization function may comprise at least one of: radio resource management, network energy saving, load balancing, mobility optimization, cell selection, carrier selection, scheduling, or beam management.

In block 902, the apparatus determines, based on the one or more rules, whether to switch from a current operational mode to another operational mode from the set of operational modes.

In block 903, the apparatus performs, or runs, the current operational mode or the other operational mode based on the determination.

The apparatus may receive a request for providing assistance information indicating the set of operational modes supported by the apparatus. In this case, the apparatus may transmit the assistance information indicating the set of operational modes supported by the apparatus, wherein the assistance information is transmitted based on receiving the request. The request may be received from the network entity 107 prior to receiving the configuration, and the assistance information may be transmitted to the network entity 107 prior to receiving the configuration.

The assistance information may further comprise one or more parameters related to the set of operational modes, wherein the one or more parameters may indicate at least one of: the machine learning model to use in at least one operational mode of the set of operational modes, or a non-machine-learning-based algorithm to use in at least one operational mode of the set of operational modes for performing the network optimization function.

The apparatus may transmit an indication indicating the switch to the other operational mode, based on determining to switch from the current operational mode to the other operational mode. The indication may be transmitted to the network entity 107.

As an example, the set of operational modes may comprise: a first operational mode comprising running the inference with the machine learning model for performing the network optimization function (e.g., see FIG. 3 and the description thereof), a second operational mode comprising deactivating the machine learning model, and using a non-machine-learning-based algorithm for performing the network optimization function (e.g., see FIG. 4 and the description thereof), a third operational mode comprising collecting labelled training data, while using the non-machine-learning-based algorithm for performing the network optimization function, and updating the machine learning model based on the labelled training data (e.g., see FIG. 5A and 5B and the descriptions thereof), and a fourth operational mode comprising determining one or more performance metrics of the machine learning model (e.g., see FIG. 6A and 6B and the descriptions thereof).

As an example (see FIG. 7 and the description thereof) the one or more rules may indicate at least one of: switching from the first operational mode to the fourth operational mode at one or more pre-defined time intervals, switching from the fourth operational mode to the first operational mode, if the one or more performance metrics of the machine learning model are above a first threshold, switching from the fourth operational mode to the second operational mode, if the one or more performance metrics of the machine learning model are below a second threshold, switching from the fourth operational mode to the third operational mode, if the one or more performance metrics of the machine learning model are between the second threshold and the first threshold, switching from the second operational mode to the third operational mode, if a past performance of the machine learning model is above a third threshold, and if the non-machine-learning-based algorithm has been used for performing the network optimization function at least for a pre-defined period of time, switching from the third operational mode to the first operational mode, if the updating of the machine learning model is completed, switching from the third operational mode to the second operational mode, if the updating of the machine learning model failed, or switching from the first operational mode to the second operational mode, if a performance degradation caused by running the inference with the machine learning model is above a fourth threshold.

The one or more performance metrics of the machine learning model may be determined by comparing one or more outputs of the machine learning model with one or more corresponding outputs of the non-machine-learning-based algorithm, or with a reference threshold or range.

Alternatively, the one or more performance metrics of the machine learning model may be determined by comparing one or more outputs of the machine learning model with corresponding ground truth data. In this case, the fourth operational mode may further comprise: determining one or more performance metrics of the non-machine-learning-based algorithm associated with the network optimization function by comparing one or more outputs of the non-machine-learning-based algorithm with the corresponding ground truth data; comparing the one or more performance metrics of the machine learning model and the one or more performance metrics of the non-machine-learning-based algorithm; and determining, based on the comparison, whether to use the machine learning model or the non-machine-learning-based algorithm for performing the network optimization function.

The one or more performance metrics may comprise at least one of: accuracy, convergence time, reliability, or statistical significance.

FIG. 10 illustrates a flow chart according to an example embodiment of a method performed by an apparatus 1200 of FIG. 12. For example, the apparatus 1200 may be, or comprise, or be comprised in, a network entity 107, such as a network management system (NMS), or operations, administration, and maintenance (OAM) function, or a radio access network intelligent controller (RIC).

Referring to FIG. 10, in block 1001, the apparatus transmits, to a radio access network node 104, a configuration indicating one or more rules for switching between a set of operational modes associated with at least one of: inference, data collection or training of a machine learning model, the machine learning model being associated with a network optimization function. For example, the machine learning model may be used to run the network optimization function at the radio access network node 104.

For example, the network optimization function may comprise at least one of: radio resource management, network energy saving, load balancing, mobility optimization, cell selection, carrier selection, scheduling, or beam management.

The apparatus may transmit, to the radio access network node 104, a request for providing assistance information indicating the set of operational modes supported by the radio access network node. The request may be transmitted prior to transmitting the configuration.

The apparatus may receive, from the radio access network node, the assistance information indicating the set of operational modes supported by the radio access network node. The assistance information may be received prior to transmitting the configuration.

The assistance information may further comprise one or more parameters related to the set of operational modes, wherein the one or more parameters may indicate at least one of: the machine learning model to use in at least one operational mode of the set of operational modes, or a non-machine-learning-based algorithm to use in at least one operational mode of the set of operational modes for performing the network optimization function.

The apparatus may determine the one or more rules based at least partly on the assistance information.

The apparatus may receive, from the radio access network node 104, an indication indicating a switch from a current operational mode to another operational mode of the set of operational modes.

As an example, the set of operational modes may comprise: a first operational mode comprising running the inference with the machine learning model for performing the network optimization function (e.g., see FIG. 3 and the description thereof), a second operational mode comprising deactivating the machine learning model, and using a non-machine-learning-based algorithm for performing the network optimization function (e.g., see FIG. 4 and the description thereof), a third operational mode comprising collecting labelled training data, while using the non-machine-learning-based algorithm for performing the network optimization function, and updating the machine learning model based on the labelled training data (e.g., see FIG. 5A and 5B and the descriptions thereof), and a fourth operational mode comprising determining one or more performance metrics of the machine learning model (e.g., see FIG. 6A and 6B and the descriptions thereof).

As an example (see FIG. 7 and the description thereof) the one or more rules may indicate at least one of: switching from the first operational mode to the fourth operational mode at one or more pre-defined time intervals, switching from the fourth operational mode to the first operational mode, if the one or more performance metrics of the machine learning model are above a first threshold, switching from the fourth operational mode to the second operational mode, if the one or more performance metrics of the machine learning model are below a second threshold, switching from the fourth operational mode to the third operational mode, if the one or more performance metrics of the machine learning model are between the second threshold and the first threshold, switching from the second operational mode to the third operational mode, if a past performance of the machine learning model is above a third threshold, and if the non-machine-learning-based algorithm has been used for performing the network optimization function at least for a pre-defined period of time, switching from the third operational mode to the first operational mode, if the updating of the machine learning model is completed, switching from the third operational mode to the second operational mode, if the updating of the machine learning model failed, or switching from the first operational mode to the second operational mode, if a performance degradation caused by running the inference with the machine learning model is above a fourth threshold.

The one or more performance metrics of the machine learning model may be determined by comparing one or more outputs of the machine learning model with one or more corresponding outputs of the non-machine-learning-based algorithm, or with a reference threshold or range.

Alternatively, the one or more performance metrics of the machine learning model may be determined by comparing one or more outputs of the machine learning model with corresponding ground truth data. In this case, the fourth operational mode may further comprise: determining one or more performance metrics of the non-machine-learning-based algorithm associated with the network optimization function by comparing one or more outputs of the non-machine-learning-based algorithm with the corresponding ground truth data; comparing the one or more performance metrics of the machine learning model and the one or more performance metrics of the non-machine-learning-based algorithm; and determining, based on the comparison, whether to use the machine learning model or the non-machine-learning-based algorithm for performing the network optimization function.

The one or more performance metrics may comprise at least one of: accuracy, convergence time, reliability, or statistical significance.

The blocks, related functions, and information exchanges (messages) described above by means of FIGS. 8-10 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 11 illustrates an example of an apparatus 1100 comprising means for performing one or more of the example embodiments described above. For example, the apparatus 1100 may be an apparatus such as, or comprising, or comprised in, a radio access network node 104.

The radio access network node may also be referred to, for example, as a network element, a next generation radio access network (NG-RAN) node, a NodeB, an eNB, a gNB, a base transceiver station (BTS), a base station, an NR base station, a 5G base station, an access node, an access point (AP), a cell site, a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 1100 may comprise, for example, a circuitry or a chipset applicable for realizing one or more of the example embodiments described above. The apparatus 1100 may be an electronic device comprising one or more electronic circuitries. The apparatus 1100 may comprise a communication control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1100 may further comprise or be connected to a communication interface 1130, such as a radio unit, comprising hardware and/or software for realizing communication connectivity with one or more wireless communication devices according to one or more communication protocols. The communication interface 1130 comprises at least one transmitter (Tx) and at least one receiver (Rx) that may be integrated to the apparatus 1100 or that the apparatus 1100 may be connected to. The communication interface 1130 may provide means for performing some of the blocks for one or more example embodiments described above. The communication interface 1130 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

The communication interface 1130 provides the apparatus with radio communication capabilities to communicate in the wireless communication network. The communication interface may, for example, provide a radio interface to one or more wireless communication devices. The apparatus 1100 may further comprise or be connected to another interface towards a core network such as the network coordinator apparatus or AMF, and/or to a network entity 107 such as an NMS, OAM or RIC, and/or to the access nodes of the wireless communication network.

The apparatus 1100 may further comprise a scheduler 1140 that is configured to allocate radio resources. The scheduler 1140 may be configured along with the communication control circuitry 1110 or it may be separately configured.

It is to be noted that the apparatus 1100 may further comprise various components not illustrated in FIG. 11. The various components may be hardware components and/or software components.

FIG. 12 illustrates an example of an apparatus 1200 comprising means for performing one or more of the example embodiments described above. For example, the apparatus 1200 may be, or comprise, or be comprised in, a network entity 107 such as a network management system (NMS), or operations, administration, and maintenance (OAM) function, or a radio access network intelligent controller (RIC).

The apparatus 1200 may comprise, for example, a circuitry or a chipset applicable for realizing one or more of the example embodiments described above. The apparatus 1200 may be an electronic device or computing system comprising one or more electronic circuitries. The apparatus 1200 may comprise a control circuitry 1210 such as at least one processor, and at least one memory 1220 storing instructions 1222 which, when executed by the at least one processor, cause the apparatus 1200 to carry out one or more of the example embodiments described above. Such instructions 1222 may, for example, include computer program code (software). The at least one processor and the at least one memory storing the instructions may provide the means for providing or causing the performance of any of the methods and/or blocks described above.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory.

The apparatus 1200 may further comprise or be connected to a communication interface 1230 comprising hardware and/or software for realizing communication connectivity according to one or more communication protocols. The communication interface 1230 may comprise at least one transmitter (Tx) and at least one receiver (Rx) that may be integrated to the apparatus 1200 or that the apparatus 1200 may be connected to. The communication interface 1230 may provide means for performing some of the blocks for one or more example embodiments described above. The communication interface 1230 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

The communication interface 1230 provides the apparatus with communication capabilities to communicate in the wireless communication network. The communication interface 1230 may, for example, provide a radio, cable or fiber interface to one or more network nodes of a radio access network.

It is to be noted that the apparatus 1200 may further comprise various components not illustrated in FIG. 12. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
receive a configuration indicating one or more rules for switching between a set of operational modes associated with at least one of: inference, data collection or training of a machine learning model, the machine learning model being associated with a network optimization function;
determine, based on the one or more rules, whether to switch from a current operational mode to another operational mode from the set of operational modes; and
perform the current operational mode or the other operational mode based on the determination.

2. The apparatus according to claim 1, further being caused to:
receive a request for providing assistance information indicating the set of operational modes supported by the apparatus; and
transmit the assistance information indicating the set of operational modes supported by the apparatus, wherein the assistance information is transmitted based on receiving the request.

3. The apparatus according to claim 2, wherein the assistance information further comprises one or more parameters related to the set of operational modes,
wherein the one or more parameters indicate at least one of: the machine learning model to use in at least one operational mode of the set of operational modes, or a non-machine-learning-based algorithm to use in at least one operational mode of the set of operational modes for performing the network optimization function.

4. The apparatus according to any preceding claim, further being caused to:
transmit an indication indicating the switch to the other operational mode, based on determining to switch from the current operational mode to the other operational mode.

5. The apparatus according to any preceding claim, wherein the set of operational modes comprises:
a first operational mode comprising running the inference with the machine learning model for performing the network optimization function,
a second operational mode comprising deactivating the machine learning model, and using a non-machine-learning-based algorithm for performing the network optimization function,
a third operational mode comprising collecting labelled training data, while using the non-machine-learning-based algorithm for performing the network optimization function, and updating the machine learning model based on the labelled training data, and
a fourth operational mode comprising determining one or more performance metrics of the machine learning model.

6. The apparatus according to claim 5, wherein the one or more rules indicate at least one of:
switching from the first operational mode to the fourth operational mode at one or more pre-defined time intervals,
switching from the fourth operational mode to the first operational mode, if the one or more performance metrics of the machine learning model are above a first threshold,
switching from the fourth operational mode to the second operational mode, if the one or more performance metrics of the machine learning model are below a second threshold,
switching from the fourth operational mode to the third operational mode, if the one or more performance metrics of the machine learning model are between the second threshold and the first threshold,
switching from the second operational mode to the third operational mode, if a past performance of the machine learning model is above a third threshold, and if the non-machine-learning-based algorithm has been used for performing the network optimization function at least for a pre-defined period of time,
switching from the third operational mode to the first operational mode, if the updating of the machine learning model is completed,
switching from the third operational mode to the second operational mode, if the updating of the machine learning model failed, or
switching from the first operational mode to the second operational mode, if a performance degradation caused by running the inference with the machine learning model is above a fourth threshold.

7. The apparatus according to any of claims 5-6, wherein the one or more performance metrics of the machine learning model are determined by comparing one or more outputs of the machine learning model with one or more corresponding outputs of the non-machine-learning-based algorithm, or with a reference threshold or range.

8. The apparatus according to any of claims 5-6, wherein the one or more performance metrics of the machine learning model are determined by comparing one or more outputs of the machine learning model with corresponding ground truth data.

9. The apparatus according to claim 8, wherein the fourth operational mode further comprises:
determining one or more performance metrics of the non-machine-learning-based algorithm associated with the network optimization function by comparing one or more outputs of the non-machine-learning-based algorithm with the corresponding ground truth data;
comparing the one or more performance metrics of the machine learning model and the one or more performance metrics of the non-machine-learning-based algorithm; and
determining, based on the comparison, whether to use the machine learning model or the non-machine-learning-based algorithm for performing the network optimization function.

10. The apparatus according to any of claims 5-9, wherein the one or more performance metrics comprise at least one of: accuracy, convergence time, reliability, or statistical significance.

11. The apparatus according to any preceding claim, wherein the network optimization function comprises at least one of: radio resource management, network energy saving, load balancing, mobility optimization, cell selection, carrier selection, scheduling, or beam management.

12. An apparatus comprising at least one processor, and at least one memory storing instructions that, when executed by the at least one processor, cause the apparatus at least to:
transmit, to a radio access network node, a configuration indicating one or more rules for switching between a set of operational modes associated with at least one of: inference, data collection or training of a machine learning model, the machine learning model being associated with a network optimization function.

13. The apparatus according to claim 12, further being caused to:
transmit, to the radio access network node, a request for providing assistance information indicating the set of operational modes supported by the radio access network node;
receive, from the radio access network node, the assistance information indicating the set of operational modes supported by the radio access network node; and
determine the one or more rules based at least partly on the assistance information.

14. A method comprising:
receiving a configuration indicating one or more rules for switching between a set of operational modes associated with at least one of: inference, data collection or training of a machine learning model, the machine learning model being associated with a network optimization function;
determining, based on the one or more rules, whether to switch from a current operational mode to another operational mode from the set of operational modes; and
performing the current operational mode or the other operational mode based on the determination.

15. A method comprising:
transmitting, to a radio access network node, a configuration indicating one or more rules for switching between a set of operational modes associated with at least one of: inference, data collection or training of a machine learning model, the machine learning model being associated with a network optimization function.
